## Europäisches Patentamt
## European Patent Office
## Office européen des brevets

(19)

(11) Veröffentlichungsnummer: **0 071 703**
**B1**

(12)

# EUROPÄISCHE PATENTSCHRIFT

(45) Veröffentlichungstag der Patentschrift:
**24.08.88**

(51) Int. Cl.⁴: **G 05 B 19/04**

(21) Anmeldenummer: **82104227.2**

(22) Anmeldetag: **14.05.82**

(54) **Mikroprozessorsystem zur Steuerung von Arbeitsabläufen.**

(30) Priorität: **04.08.81 DE 3130746**

(43) Veröffentlichungstag der Anmeldung:
**16.02.83 Patentblatt 83/7**

(45) Bekanntmachung des Hinweises auf die Patenterteilung:
**24.08.88 Patentblatt 88/34**

(84) Benannte Vertragsstaaten:
**AT CH FR GB IT LI NL SE**

(56) Entgegenhaltungen:
**DE - A - 2 715 497**

(73) Patentinhaber: **Dr. Johannes Heidenhain GmbH,
Nansenstrasse 17, D-8225 Traunreut (DE)**

(72) Erfinder: **Schwefel, Ernst, Dipl.-Phys.,
Reichenbergweg 2, D-8225 Traunreut (DE)**

## Beschreibung

Die Erfindung betrifft ein Multiprozessorsystem zur Steuerung von Arbeitsabläufen einer Bearbeitungsmaschine gemäss dem Oberbegriff des Anspruchs 1.

Prozessorsysteme mit einem Digitalrechner (Steuerungen mit Wortprozessoren) sowie Prozessorsysteme, die keinen Digitalrechner aufweisen (Steuerungen mit Bitprozessoren), sind als Ersatz für übliche Relaissteuerungen von Bearbeitungsmaschinen bereits bekannt. Bei diesem Einsatzgebiet werden bevorzugt Einzelbitdaten eingegeben, ausgegeben, gespeichert und mit ihnen logische Verknüpfungen durchgeführt; die Verarbeitungsgeschwindigkeit von Steuerungen mit Bitprozessoren liegt in der Grössenordnung von 1 µs pro Verknüpfung. Digitalrechner in freiprogrammierbaren Steuerungen dienen hauptsächlich der Verarbeitung von Zahlen und der Durchführung von arithmetischen Funktionen; für die Bildung logischer Funktionen aus Einzelbits sind sie jedoch wegen der langsamen Verarbeitungsgeschwindigkeit in der Grössenordnung von 10 µs bis 20 µs pro Verknüpfung nur bedingt nutzbar.

Diese langsame Verarbeitungsgeschwindigkeit resultiert aus dem Fehlen von Befehlen für die Einzelbitverarbeitung; der Digitalrechner muss für die Einzelbitverknüpfung eine Reihe von Befehlen ausführen.

In der DE-A-2 715 492 ist ein Multiprozessorsystem für die Steuerung von Arbeitsabläufen einer Bearbeitungsmaschine beschrieben, das einen Datenprozessor mit einem Datenspeicher und mit einem Programmspeicher zur Durchführung arithmetischer Operationen sowie einen Bitprozessor mit einem Einzelbitspeicher und mit einem Programmspeicher für die Einzelbitverarbeitung zur Steuerung von Maschinenfunktionen aufweist. Der Bitprozessor ist mittels einer Kontakthauptleitung mit dem Datenprozessor sowie über eine Eingabeeinheit und eine Ausgabeeinheit mit der Bearbeitungsmaschine verbunden.

Der Erfindung liegt die Aufgabe zugrunde, bei einem Multiprozessorsystem der oben genannten Gattung die Anzahl der Systemelemente zu verringern.

Diese Aufgabe wird erfindungsgemäss durch die kennzeichnenden Merkmale des Anspruchs 1 gelöst.

Die mit der Erfindung erzielten Vorteile bestehen insbesondere darin, dass mit dem vorgeschlagenen Multiprozessorsystem eine Steuerung von Bearbeitungsmaschinen ermöglicht wird, bei der die Bildung von arithmetischen und logischen Funktionen mit hoher Verarbeitungsgeschwindigkeit erfolgt und Elemente beider Steuerungsarten gemeinsam benutzt werden, so dass sich mit verringerten Kosten eine hocheffiziente Programmsteuerung ergibt.

Vorteilhafte Ausgestaltungen der Erfindung entnimmt man den Unteransprüchen.

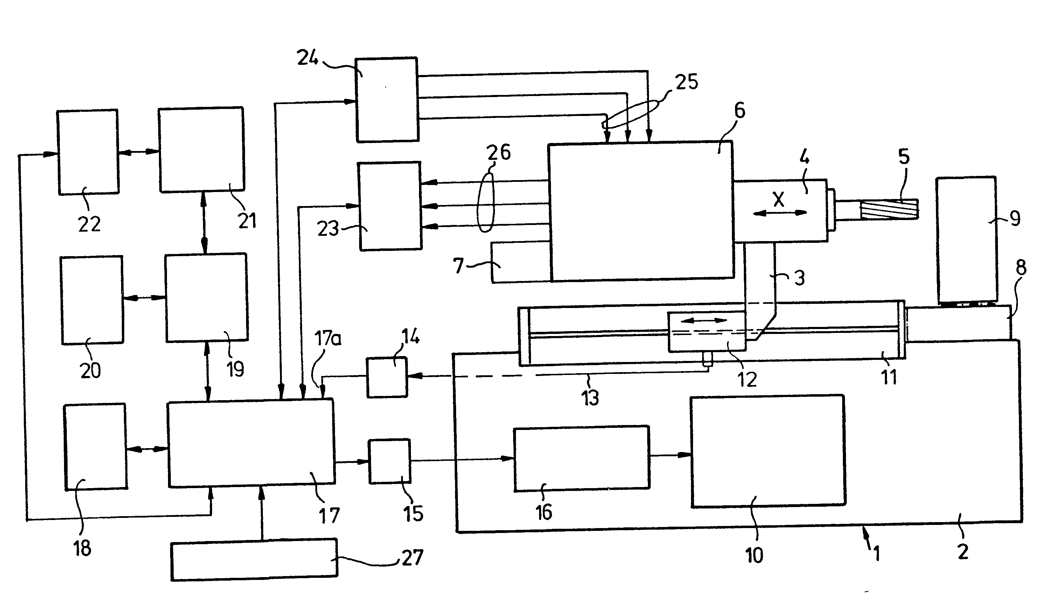

Ein Ausführungsbeispiel der Erfindung wird anhand der Zeichnung näher erläutert.

In der Figur ist schematisch eine dreiachsige Fräsmaschine 1 dargestellt, bei der zur Vereinfachung nur eine Bewegungsrichtung X gezeigt ist. In einem Bett 2 ist ein Schlitten 3 in X-Richtung verschiebbar geführt, der einen Spindelstock 4 mit einem Werkzeug 5 und einem Spindelkasten 6 trägt. Der Antrieb des Werkzeugs 5 erfolgt durch einen Spindelmotor 7 über ein nicht dargestelltes Schaltgetriebe im Spindelkasten 6. Auf dem Bett 2 ist ein Tisch 8 zur Aufnahme eines zu bearbeitenden Werkstücks 9 quer zur X-Richtung verschiebbar geführt. Zur Positionierung des Werkzeugs 5 in der X-Richtung ist der Schlitten 3 in dieser Richtung mittels einer Antriebseinheit 10 verschiebbar.

Zur Ermittlung der Ist-Werte der Position der Schneidkante des Werkzeugs 5 bei der Verschiebung des Schlittens 3 ist am Bett 2 ein Positionsmessgerät 11 mit einem Massstab befestigt, der von einer am Schlitten 3 starr befestigten Abtasteinheit 12 abgetastet wird; die ermittelten Istwerte werden über eine Leitung 13 einer Auswerte-/Anzeigeeinheit 14 und weiter einem Eingang 17a eines Rechners 17 für den Sollwert-/Istwertvergleich zugeleitet, der über einen Digital/Analogwandler 15 einen Antriebsregler 16 für die Antriebseinheit 10 beaufschlagt; die programmierten Sollwerte für die Position des Werkzeugs 5 werden einem Datenspeicher 18 entnommen. Zur Positionierung des Werkzeugs 5 in der X-Richtung wird am Analogausgang des Digital/Analogwandlers 15 eine Spannung ausgegeben, die der Differenz zwischen dem programmierten Lage-Sollwert und dem jeweiligen Lage-Istwert des Werkzeugs 5 proportional ist.

Der Digitalrecher 17 ist weiterhin erfindungsgemäss über ein Schaltmittel 19 an einen Programmspeicher 20 und an ein programmsteuerbares logisches Netzwerk 21 für die Einzelbitverarbeitung angeschlossen, das mit einem Einzelbitspeicher 22 zur Aufnahme von Einzelbitdaten zur Bildung von logischen Funktionen im logischen Netzwerk 21 verbunden ist.

Im Programmspeicher 20 des Digitalrechners 17 sind erfindungsgemäss neben Befehlen für den Digitalrechner 17 zur Bildung arithmetischer Funktionen oder Operationen noch gesonderte Befehle für die Einzelbitverknüpfungen im logischen Netzwerk 21 vorgesehen. Während der Einzelbitverarbeitung werden die Befehle für die Einzelbitverknüpfung durch den Digitalrechner 17 aus dem Programmspeicher 20 in das logische Netzwerk 21 für die Einzelbitverarbeitung übertragen und dort ausgeführt. Die Befehlslesezeit des Digitalrechners 17 bleibt auch für die Befehle der Einzelbitverarbeitung erhalten, wobei die Befehle für die Einzelbitverknüpfung durch das Schaltmittel 19 vom Digitalrechner 17 ferngehalten werden und statt dessen dem Digitalrechner 17 jeweils ein Befehl zugeleitet wird, der die Erhöhung des Programmzählers um einen Programmschritt zur Folge hat. Der Einzelbitspeicher 22 ist während der laufenden Einzelbitverarbeitung am logischen Netzwerk 21 und während der nicht stattfindenden Einzelbitverarbeitung am Digitalrechner 17 angeschlossen.

Die Umschaltung von Rechnertätigkeit auf Einzelbitverarbeitung erfolgt auf Veranlassung des Digitalrechners 17 aufgrund eines Befehls für den Digitalrechner 17 und die Zurückschaltung auf Rechnertätigkeit auf Veranlassung des logischen Netzwerks 21 aufgrund eines Befehls für die Einzelbitverarbeitung; diese Umschaltung zwischen Rechnertätigkeit und Einzelbitverarbeitung kann auch in Abhängigkeit von den angewählten Befehlsadressen des Programmspeichers 20 erfolgen.

Eine Eingabeeinheit 23 und eine Ausgabeeinheit 24 für die Einzelbitverarbeitung sind bevorzugt über den Digitalrechner 17 an das logische Netzwerk 21 angeschlossen. Die Ausgabeeinheit 24 beaufschlagt mit drei Ausgangsleitungen 25 nicht dargestellte Stellglieder im Spindelkasten 6 zur Wahl verschiedener Übersetzungen des Schaltgetriebes. Die jeweiligen Übersetzungsverhältnisse werden von nicht gezeigten Sensoren im Spindelkasten 6 ermittelt und über Eingangsleitungen 26 der Eingabeeinheit 23 zugeführt. Nach Massgabe der Ausgangssignale der Eingabeeinheit 23 werden im logischen Netzwerk 21 Einzelbitverknüpfungen entsprechend dem im Programmspeicher 20 enthaltenen Programm durchgeführt und an die Ausgabeeinheit 24 zur Steuerung des Schaltgetriebes ausgegeben. Die Eingabeeinheit 23 und die Ausgabeeinheit 24 wirken auf bestimmte Speicherbereiche des Einzelbitspeichers 22; die Bedienung der Eingabeeinheit 23 und der Ausgabeeinheit 24 erfolgt zyklisch vom Rechner 17. Die Eingabeeinheit 23 und die Ausgabeeinheit 24 können auch direkt am logischen Netzwerk 21 angeschlossen sein. Die Eingabe von numerischen Daten in den Datenspeicher 18, von Programmbefehlen in den Programmspeicher 20 und von Einzelbitdaten in den Einzelbitspeicher 22 erfolgt über eine Eingabeeinrichtung 27, die mit dem Digitalrechner 17 verbunden ist. Neben der erwähnten Steuerung des Schaltgetriebes können auch weitere Maschinenfunktionen wie Spindeldrehrichtung, Kühlmittelbetätigung etc. durch entsprechend programmierte logische Verknüpfungen erzeugt werden.

## Patentansprüche

1. Multiprozessorsystem zur Steuerung von Arbeitsabläufen einer Bearbeitungsmaschine (1), bei der ein Digitalrechner (17) mit einem Datenspeicher (18) und mit einem Programmspeicher (20) zur freiprogrammierbaren numerischen Positionssteuerung sowie ein Bitprozessor (21) mit einem Einzelbitspeicher (22) für die Einzelbitverarbeitung zur freiprogrammierbaren Steuerung von Maschinenfunktionen vorgesehen sind, dadurch gekennzeichnet, dass ein Schaltmittel (19) den Digitalrechner (17) mit dem Programmspeicher (20) und mit dem Bitprozessor (21) verbindet, dass der Programmspeicher (20) neben den Befehlen für den Digitalrechner (17) gesonderte Befehle für die Einzelbitverarbeitung im Bitprozessor (21) enthält, dass das Schaltmittel (19) während der Einzelbitverarbeitung die vom Digitalrechner (17) aus dem Programmspeicher (20) aufgerufenen Befehle für die Einzelbitverknüpfung in den Bitprozessor (21) überträgt und dass das Schaltmittel (19) die Befehle für die Einzelbitverknüpfung vom Digitalrechner (17) fernhält und statt dessen dem Digitalrechner (17) jeweils einen Befehl zur Erhöhung des Programmzählers zur Aufrechterhaltung der Befehlslesezeit des Digitalrechners (17) auch für die Befehle der Einzelbitverarbeitung zuleitet.

2. Multiprozessorsystem nach Anspruch 1, dadurch gekennzeichnet, dass die Umschaltung von Rechnertätigkeit auf Einzelbitverarbeitung auf Veranlassung des Digitalrechners (17) aufgrund eines Befehls für den Digitalrechner (17) und die Zurückschaltung auf Rechnertätigkeit auf Veranlassung des Bitprozessors (21) aufgrund eines Befehls für die Einzelbitverarbeitung erfolgen.

3. Multiprozessorsystem nach den Ansprüchen 1 und 2, dadurch gekennzeichnet, dass die Umschaltung zwischen Einzelbitverarbeitung und Rechnertätigkeit in Abhängigkeit von den angewählten Befehlsadressen des Programmspeichers (20) erfolgt.

4. Multiprozessorsystem nach Anspruch 1, dadurch gekennzeichnet, dass eine Eingabeeinheit (23) und eine Ausgabeeinheit (24) für die Einzelbitverarbeitung auf bestimmte Speicherbereiche des Einzelbitspeichers (22) wirken und dass die Bedienung der Eingabeeinheit (23) und der Ausgabeeinheit (24) zyklisch vom Digitalrechner (17) erfolgt.

5. Multiprozessorsystem nach Anspruch 1, dadurch gekennzeichnet, dass der Einzelbitspeicher (22) während der laufenden Einzelbitverarbeitung am Bitprozessor (21) und während der nicht stattfindenden Einzelbitverarbeitung am Digitalrechner (17) angeschlossen ist.

## Claims

1. Multiprocessor system for the control of operating sequences of a machine tool (1), in which are provided a digital computer (17) with a data store (18) and with a programme register (20) for freely programmable numerical position control as well as a bit processor (21) with a single-bit store (22) for single-bit processing for freely programmable control of machine functions, characterised in that a switching means (19) connects the digital computer (17) to the programme register (20) and to the bit processor (21), the programme register (20) contains, in addition to the instructions for the digital computer (17), separate instructions for single-bit processing in the bit processor (21), during single-bit processing the switching means (19) transmits to the bit processor (21) the instructions for single-bit logic operation which are called by the digital computer (17) from the programme register (20), and the switching means (19) keeps the instructions for single-bit logic operation away from the digital computer (17), and instead at any given time feeds to the digital computer (17) an instruction for increasing the programme counter to maintain the instruction reading time of the digital computer (17) for the instructions of single-bit processing as well.

2. Multiprocessor system according to claim 1, characterised in that changing over from computer activity to single-bit processing takes place at the request of the digital computer (17) on the basis of an instruction for the digital computer (17), and switching back to computer activity takes place at the request of the bit processor (21) on the basis of an instruction for single-bit processing.

3. Multiprocessor system according to claims 1 and 2, characterised in that switching between single-bit processing and computer activity takes place in dependence on the selected instruction addresses of the programme register (20).

4. Multiprocessor system according to claim 1, characterised in that an input unit (23) and an output unit (24) for single-bit processing act on certain storage areas of the single-bit store (22), and the input unit (23) and output unit (24) are operated cyclically by the digital computer (17).

5. Multiprocessor system according to claim 1, characterised in that the single-bit store (22) is connected to the bit processor (21) while single-bit processing is continuing, and to the digital computer (17) while single-bit processing is not taking place.

## Revendications

1. Système multiprocesseur pour la commande des phases de travail d'une machine d'usinage (1), dans lequel il est prévu un calculateur numérique (17) avec une mémoire de données (18) et avec une mémoire de programme (20), pour la commande numérique de position librement programmable, ainsi qu'un processeur 1 bit (21) avec une mémoire à bits individuels (22) pour le traitement par bits individuels, en vue de la commande librement programmable de fonctions de la machine, caractérisé par le fait qu'un organe de commutation (19) relie le calculateur numérique (17) à la mémoire de programme (20) et au processeur 1 bit (21), par le fait que la mémoire de programme (20) contient, en plus des instructions pour le calculateur numérique (17), des instructions séparées pour le traitement par bits individuels dans le processeur 1 bit (21), par le fait que, pendant le traitement par bits individuels, l'organe de commutation (19) transmet dans le processeur 1 bit (21) les instructions appelées dans la mémoire de programme (20) par le calculateur numérique (17), pour la combinaison par bits individuels, et par le fait que l'organe de commutation (19) maintient à l'écart du calculateur numérique (17) les instructions pour la combinaison par bits individuels et, au lieu de celles-ci, fournit à chaque fois au calculateur numérique (17) une instruction d'incrémentation du compteur de programme pour le maintien du temps de lecture d'instruction du calculateur numérique (17), également pour les instructions du traitement par bits individuels.

2. Système multiprocesseur selon revendication 1, caractérisé par le fait que la commutation de l'activité calculateur sur traitement par bits individuels s'effectue sur initiative du calculateur numérique (17), sur la base d'une instruction qui lui est destinée, et le retour à l'activité calculateur s'effectue sur initiative du processeur 1 bit (21), sur la base d'une instruction pour le traitement par bits individuels.

3. Système multiprocesseur selon les revendications 1 et 2, caractérisé par le fait que la commutation entre traitement par bits individuels et activité calculateur s'effectue en fonction des adresses d'instructions choisies de la mémoire de programme (20).

4. Système multiprocesseur selon la revendication 1, caractérisé par le fait qu'une unité d'entrée (23) et une unité de sortie (24) pour le traitement par bits individuels agissent sur des domaines déterminés de la mémoire à bits individuels (22), et par le fait que la commande d'activité de l'unité d'entrée (23) et de l'unité de sortie (24) s'effectue cycliquement par le calculateur numérique (17).

5. Système multiprocesseur selon revendication 1, caractérisé par le fait que la mémoire à bits individuels (22) est raccordée au processeur 1 bit (21) pendant le cours du traitement par bits individuels, et au calculateur numérique (17) pendant l'absence de traitement par bits individuels.